# EUROPEAN PATENT SPECIFICATION

(11) **EP 0 380 163 B1**
(45) Date of publication and mention of the grant of the patent: **01.05.1996**
(21) Application number: 90200121.3
(22) Date of filing: 16.01.1990
(51) Int. Cl.: B29C 67/20, B29C 44/44

(54) **Method for thermally insulating a pipeline**
Verfahren zur thermischen Isolierung einer Rohrleitung
Procédé d'isolation thermique d'une conduite

(30) Priority: 24.01.1989 GB 8901478
(43) Date of publication of application: 01.08.1990
(73) Proprietor: SHELL INTERNATIONALE RESEARCH MAATSCHAPPIJ B.V., NL-2596 HR Den Haag (NL)
(72) Inventor: Collins, Michael Harry, Chester, Cheshire CH1 3SH (GB); Lyle, Alan Raymond, Chester, Cheshire CH1 3SH (GB)

(56) References cited:
- WO-A-87/04768
- DE-A- 3 216 463
- GB-A- 1 482 661
- GB-A- 2 210 316
- NL-A- 8 502 032
- US-A- 4 676 695

## Description

The invention relates to a method for thermally insulating a pipeline along at least part of its length. It is known in the art to insulate a pipeline by applying a thermal insulation layer around the pipeline. A subsea pipeline may additionally be provided with a protective sleeve around the thermal insulation layer so as to protect the said layer against damage from hydrostatic pressure. In order to allow the insulated pipeline to be laid by any one of the existing pipelaying methods, the thermal insulation layer and the sleeve should have adequate flexibility.

It is known from UK patent specification No. 1 482 661 to thermally insulate a pipeline by manufacturing a protective sleeve at a selected radial distance from the pipeline in a die while inducing the sleeve and pipeline to move axially at substantially the same speed relative to the die and progressively injecting components for forming a thermal insulation layer into the annular space formed between the pipeline and sleeve.

US patent No. 4 657 050 discloses a method for thermally insulating a pipeline, wherein first a thermal insulation layer is manufactured around the pipeline and whereupon a plastic sleeve of uniform diameter is manufactured around the insulation layer.

In the known method it is required to machine the insulation layer to a uniform outer diameter before manufacturing the plastic sleeve, in order to allow the sleeve to be fitted around the thermal insulation layer.

It is an object of the invention to provide a method for thermally insulating a pipeline wherein an adequate fit of the plastic sleeve around the thermal insulation layer is obtained while eliminating the step of machining the said layer to a uniform diameter.

In accordance with the invention a method for thermally insulating a pipeline along at least part of its length is characterized in that the step of manufacturing the protective sleeve comprises:
- supplying a thermosetting resin and fibres simultaneously to an annular space between the die and a mandrel extending in the die;
- allowing the thermosetting resin to cure so as to form a fibre reinforced protective sleeve; and
- simultaneously inducing the sleeve to move through the die.

The method according to the invention enables manufacturing of an annular thermal insulation layer and a protective sleeve around a pipeline in a single operation and in a continuous manner.

Preferably the components for forming the thermal insulation layer comprise a thermosetting resin, which resin is allowed to cure in the annular space between the sleeve and the pipeline so as to form a thermal insulation layer around the pipeline. An insulation layer made from such a resin has adequate mechanical properties even at elevated temperatures.

It is preferred to inject microspheres into the annular space between the sleeve and the pipeline simultaneously with the thermosetting resin so as to create a syntactic insulation layer having a low thermal conductivity and a high resistance against hydrostatic pressure.

The invention will now be explained in more detail with reference to the accompanying drawings, wherein:
Figure 1 shows schematically a longitudinal cross-section of an apparatus for thermally insulating a pipeline by the method according to the invention;
Figure 2 shows cross-section II-II of Figure 1;
Figure 3 shows schematically the apparatus of Figure 1 and a pipeline being thermally insulated by the method according to the invention; and
Figure 4 shows schematically a longitudinal cross-section of an alternative apparatus for thermally insulating a pipeline by the method according to the invention.

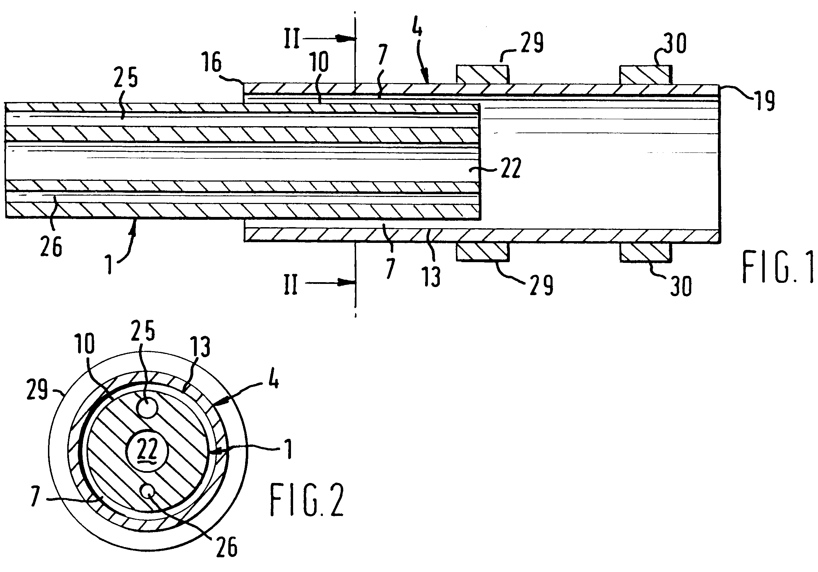

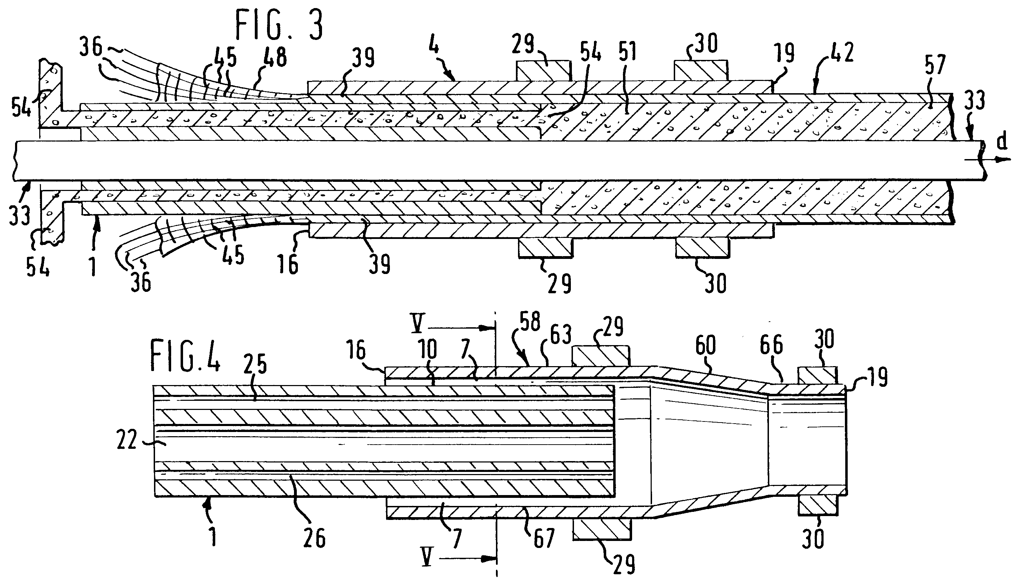

Reference is now made to Figures 1 and 2, which show a cylindrical mandrel 1 extending concentrically into a die 4, the die having a larger internal diameter than the outer diameter of the mandrel 1. Thus, an annular space 7 is formed between the outer wall 10 of the mandrel 1 and the inner wall 13 of the die 4. The end of the die 4 through which the mandrel 1 extends is defined as the inlet end 16, and the opposite end of the die 4 is defined as the outlet end 19.

The mandrel 1 is provided with a cylindrical channel 22 arranged concentrically in the mandrel 1, which channel has an internal diameter corresponding to the outer diameter of a pipeline which is to be insulated. Furthermore the mandrel 1 is provided with two feed channels 25,26 extending parallel to the cylindrical channel 22.

A primary heater 29 and a secondary heater 30 surround the die 4 along part of its length.

Reference is now further made to Figure 3.

During normal operation a pipeline 33 is induced to move axially through the cylindrical channel 22 of the mandrel 1 and through the die 4, in the direction (d) from the inlet end 16 to the outlet end 19.

A thermosetting resin is introduced at the inlet end 16 of the die 4 into the annular space 7 between the die 4 and the mandrel 1. Rovings 36 are introduced into the annular space 7 simultaneously with the thermosetting resin. The thermosetting resin is allowed to adhere to the rovings 36. The thermosetting resin starts to cure in the die 4, thereby forming a protective sleeve 42. The rovings 36 provide stability for the sleeve until curing has taken place.

Reinforcement fibres 45 are supplied to the annular space 7 between the die 4 and the mandrel 1 simultaneously with the thermosetting resin, which fibres 45 are allowed to adhere to the thermosetting resin. The fibres 45 are arranged in the form of a filament mat 48.

The sleeve 42 is pulled at the same speed as the pipeline 33 through the die 4, while an annular space 51 is maintained between the pipeline 33 and the sleeve 42.

A mixture 54 of a polyester resin and hollow glass microspheres is continuously injected through the feed channels 25,26 of the mandrel 1 into the space 51 between the pipeline 33 and the sleeve 42 in which space the polyester resin is allowed to adhere to the outer wall of the pipeline 33 and to the inner wall of the sleeve 42. The polyester resin cures to a syntactic insulation layer 57 of matrix material in which hollow glass microspheres are embedded.

Curing of the polyester resin and the thermosetting resin is accelerated by heating the said resins with the heaters 29,30. The heat provided by the heaters 29,30 is controlled so that the polyester resin and the thermosetting resin are virtually cured by the time these resins leave the die 4.

Figure 4 shows a tapered die construction for use in the method according to the invention. Both the thermosetting resin and the polyester resin may have a tendency to shrink during curing. To reduce the occurrence of thermal cracks and voids in the sleeve 42 and/or the syntactic insulation layer 57 due this tendency of shrinkage a tapered die 58 can be used. This tapered die 58 is similar to the tubular die with reference to Figures 1 and 2, except that the tapered die 58 comprises an intermediate part 60 which is internally tapered. The intermediate part 60 is arranged between an inlet part 63 and an outlet part 66 of smaller internal diameter than the inlet part, and the intermediate part 60 tapers internally from the inner diameter of the inlet part 63 to the inner diameter of the outlet part 66. The mandrel 1 has a smaller outer diameter than the inner diameter of the inlet part 63 of the die 58, which mandrel 1 extends concentrically into the inlet part 63. Thus, an annular space 7 is formed between the inner wall 67 of the inlet part 63 of the die 58 and the outer wall 10 of the mandrel 1.

The tapered die 58 operates substantially similar to the tubular die 4 shown in Figures 1, 2 and 3. However, in use the sleeve 42 moves along the tapered inner wall of the intermediate part 60 of the tapered die 58, and thereby the sleeve 42 and the syntactic insulation layer 57 are radially compressed as at this location of the die 58 the polyester resin and the thermosetting resin have not yet completely cured. This radial compression reduces the occurrence of thermal cracks and voids in the sleeve 42 and the syntactic layer 57.

In the Figures a mandrel is shown with two feed channels. It will be understood that the number of feed channels can also be one or more than two, or that an annular feed channel is applied. In case of more than one feed channel, different components for forming the thermal insulation layer can be supplied through separate feed channels.

In a suitable embodiment of the invention the filament mat of reinforcement fibres is pre-impregnated with the thermosetting resin.

Preferably each thermosetting resin is selected from the group of epoxy, polyester, polyurethane and phenol-formaldehyde resins.

It will be understood that instead of introducing a polyester resin and microspheres into the space between the pipeline and the sleeve also a pure thermosetting, or a resin mixed with a foam generating agent may be introduced into said space.

Instead of introducing a filament mat and a thermosetting resin into the annular space between the die and the mandrel a filament mat only can be introduced into said space, which mat serves to contain the polymer resin between the mat and the pipeline before said resin has cured.

A good bond between the syntactic insulation layer and the pipeline is obtained if the pipeline is provided with an anticorrosion coating, e.g. fusion bonded epoxy, before the syntactic insulation layer is applied. It will be appreciated that the internal diameter of the cylindrical channel of the mandrel through which the pipeline moves should then correspond to the outer diameter of the pipeline including the anticorrosion coating.

### EXAMPLE

An experiment has been carried out in which a cylindrical steel sample having an outer diameter of 22 mm was used to simulate the pipeline. The steel sample was provided with a 0.50 mm thick anticorrosion coating of fusion bonded epoxy. The mandrel had an outer diameter of 72 mm, and the die had an internal diameter of 76 mm. In order to account for scale factors in the temperature distribution resulting from heat supplied to the die, a solid rod rather than a tube was used as a steel sample.

Two glass-fibre mats, one outer mat and one inner mat, were used to construct the sleeve. The outer mat was impregnated with polyester resin for forming the sleeve whereas the inner mat was kept dry. The function of the inner mat was to assist in preventing penetration of polyester resin for forming the thermal insulation layer through the sleeve when the polyester resin for forming the sleeve had not yet completely cured.

A syntactic foam comprising a polyester resin and glass microspheres 3M type B37/2000 was injected in the annular space between the steel rod and the sleeve.

To inject the syntactic foam into the space between the steel rod and the sleeve a twin feed system was used. One feed channel carried syntactic foam with resin containing catalyst while the other feed channel carried syntactic foam with accelerator in the resin, a ratio 1:1 being used.

The die had the tubular shape shown in Figures 1 and 2, and was heated to a temperature of 100 °C. The sleeve and the rod were pulled through the die at a rate of 0.15 m/min, while the syntactic foam was pumped through the feed channels at a pressure of 3.1 bar. Under these conditions a 10 m length of rod was successfully coated. Evaluation of the test results revealed that no voids or cracks were present in the syntactic layer, and that a good bond between the syntactic layer and the rod was obtained.

## Claims

1. Method for thermally insulating a pipeline (33) along at least part of its length, the method comprising manufacturing a protective sleeve (42) around the pipeline (33) at a selected radial distance therefrom in a die (4,58) and inducing both the sleeve (42) and the pipeline (33) to move axially at substantially the same speed relative to the die (4,58) while maintaining an annular space (7) between the sleeve (42) and the pipeline (33) and progressively injecting components (54) for forming a thermal insulation layer in said annular space (51), characterized in that the step of manufacturing the protective sleeve (42) comprises:
- supplying a thermosetting resin and fibres (36, 45) simultaneously to an annular space (7) between the die (4,58) and a mandrel (1) extending in the die (4,58);
- allowing the thermosetting resin to cure so as to form a fibre reinforced protective sleeve (42); and
- simultaneously inducing the sleeve (42) to move through the die (4,58).

2. The method of claim 1, wherein the components (54) for forming the thermal insulation layer comprise a thermosetting resin, which resin is allowed to cure in the annular space (51) between the sleeve (42) and the pipeline (33) so as to form a thermal insulation layer (57) around the pipeline (33).

3. The method of claim 2, wherein microspheres are injected into the annular space (51) between the sleeve (42) and the pipeline (33) simultaneously with the thermosetting resin.

4. The method of any one of claims 1-3, wherein the step of manufacturing the protective sleeve (42) is carried out simultaneously with the step of progressively injecting the components (54) for forming the thermal insulation layer (57).

5. The method of claim 1, wherein the fibres (36,45) are arranged in the form of at least one filament mat.

6. The method of claim 5, wherein a filament mat is pre-impregnated with the thermosetting resin for forming the sleeve.

7. The method of any one of claims 2-6, wherein each thermosetting resin is selected from the group of epoxy, polyester, polyurethane and phenol-formaldehyde resins.

8. The method of any one of claims 2-7, wherein the sleeve (42) is induced to move through a tapered die (58), which die tapers internally to a smaller diameter, seen in the direction of movement of the sleeve (42).

9. The method of any one of claims 1-8, wherein heat is supplied by a heater (29,30) which surrounds the die (4,58) along at least part of its length.

## Patentansprüche

1. Verfahren zur thermischen Isolierung einer Rohrleitung (33) über mindestens einen Teil ihrer Länge, wobei das Verfahren die in einem Werkzeug (4, 58) erfolgende Herstellung einer die Rohrleitung (33) in einem gewählten Radialabstand umgebenden Schutzhülle (42) und das Herbeiführen einer mit im Verhältnis zu dem Werkzeug (4, 58) im wesentlichen gleicher Geschwindigkeit erfolgenden Axialbewegung der Hülle (42) und der Rohrleitung (33) umfaßt, während zwischen der Hülle (42) und der Rohrleitung (33) ein ringförmiger Raum (7) beibehalten wird und Komponenten (54) allmählich eingespritzt werden, um in dem ringförmigen Raum (51) eine thermisch isolierende Schicht zu bilden, dadurch gekennzeichnet, daß der Schritt der Herstellung der Schutzhülle (42) folgendes umfaßt:
- Man bringt ein härtbares Harz und Fasern (36, 45) gleichzeitig in einen ringförmigen Raum (7) zwischen dem Werkzeug (4, 58) und einem sich in das Werkzeug (4, 58) erstreckenden Dorn (1) ein;
- man läßt das härtbare Harz aushärten, um eine faserverstärkte Schutzhülle (42) zu bilden; und
- man führt gleichzeitig herbei, daß die Hülle (42) sich durch das Werkzeug (4, 58) bewegt.

2. Verfahren nach Anspruch 1, bei dem die Komponenten (54) zur Bildung der thermisch isolierenden Schicht ein härtbares Harz umfassen, das man in dem ringförmigen Raum (51) zwischen der Hülle (42) und der Rohrleitung (33) aushärten läßt, um eine die Rohrleitung (33) umgebende thermisch isolierende Schicht (57) zu bilden.

3. Verfahren nach Anspruch 2, bei dem man gleichzeitig mit dem härtbaren Harz Mikrokügelchen in den ringförmigen Raum (51) zwischen der Hülle (42) und der Rohrleitung (33) einspritzt.

4. Verfahren nach einem der Ansprüche 1 bis 3, bei dem man den Schritt der Herstellung der Schutzhülle (42) gleichzeitig mit dem Schritt des allmählichen Einspritzens der Komponenten (54) zur Bildung der thermisch isolierenden Schicht (57) durchführt.

5. Verfahren nach Anspruch 1, bei dem man die Fasern (36, 45) in Form von mindestens einer Filamentmatte anordnet.

6. Verfahren nach Anspruch 5, bei dem man eine Filamentmatte mit dem härtbaren Harz zur Bildung der Hülle vorimprägniert.

7. Verfahren nach einem der Ansprüche 2 bis 6, bei dem man jedes härtbare Harz aus der Gruppe von Epoxid-, Polyester-, Polyurethan- und Phenolformaldehydharzen wählt.

8. Verfahren nach einem der Ansprüche 2 bis 7, bei dem man herbeiführt, daß die Hülle (42) sich durch ein konisches Werkzeug (58) bewegt, das sich in der Bewegungsrichtung der Hülle (42) innen auf einen kleineren Durchmesser konisch verjüngt.

9. Verfahren nach einem der Ansprüche 1 bis 8, bei dem man Wärme über eine Heizvorrichtung (29, 30) zuführt, die das Werkzeug (4, 58) über mindestens einen Teil seiner Länge umgibt.

## Revendications

1. Méthode d'isolation thermique d'une conduite (33) le long d'au moins une partie de sa longueur, la méthode comprenant la fabrication d'une gaine protectrice (42) autour dela conduite (33) à une distance radiale choisie de ce dernier dans une filière (4, 58) et le fait d'induire tout à la fois la gaine (42) et la conduite (33) à se déplacer axialement à substantiellement la même vitesse relativement à la filière (4, 58), tout en maintenant un espace annulaire (7) entre la gaine (42) et la conduite (33), et en injectant progressivement des composants (54) pour la formation d'une couche d'isolation thermique dans ledit espace annulaire (51), caractérisée en ce que l'étape de fabrication de la gaine protectrice (42) comprend:
- le fait d'alimenter une résine thermodurcissable et des fibres (36, 45) simultanément à un espace annulaire (7) entre la filière (4, 58) et un mandrin (1) se prolongeant dans la filière (4, 58);
- le fait de permettre à la résine thermodurcissable de durcir de manière à former une gaine protectrice renforcée aux fibres (42); et
- le fait d'induire simultanément la gaine (42) à se déplacer à travers la filière (4, 58).

2. Méthode de la revendication 1, caractérisée en ce que les composants (54) pour la formation de la couche d'isolation thermique comprennent une résine thermodurcissable, laquelle résine peut durcir dans l'espace annulaire (51) entre la gaine (42) et la conduite (33), de manière à former une couche d'isolation thermique (57) autour de la conduite (33).

3. Méthode de la revendication 2, caractérisée en ce que des microsphères sont injectées dans l'espace annulaire (51) entre la gaine (42) et la conduite (33) simultanément avec la résine thermodurcissable.

4. Méthode de l'une quelconque des revendications 1-3, caractérisée en ce que l'étape de fabrication de la gaine protectrice (42) est effectuée simultanément avec l'étape d'injection progressive des composants (54) pour la formation de la couche d'isolation thermique (57).

5. Méthode de la revendication 1, caractérisée en ce que les fibres (36, 45) sont arrangées sous la forme d'au moins un matelas de filaments.

6. Méthode de la revendication 5, caractérisée en ce qu'un matelas de filaments est pré-imprégné à l'aide de la résine thermodurcissable pour la formation de la gaine.

7. Méthode de l'une quelconque des revendications 2-6, caractérisée en ce que chaque résine thermodurcissable est choisie parmi le groupe des résines époxyde, polyester, polyuréthane, et phénol-formaldéhyde.

8. Méthode de l'une quelconque des revendications 2-7, caractérisée en ce que la gaine (42) est induite à se déplacer à travers une filière conique (58), la filière s'effilant en cône intérieurement à un diamètre inférieur, vu dans la direction du mouvement de la gaine (42).

9. Méthode de l'une quelconque des revendications 1-8, caractérisée en ce que de la chaleur est fournie à l'aide d'une dispositif de chauffage (29, 30), qui entoure la filière (4, 58) le long d'au moins une partie de sa longueur.
